# EUROPEAN PATENT APPLICATION

(11) **EP 4 342 948 A1**
(43) Date of publication of application: **27.03.2024**
(21) Application number: 22197386.0
(22) Date of filing: 23.09.2022
(51) Int. Cl.: C08L 69/00

(54) **FLAME RETARDANT POLYCARBONATE FORMULATIONS**

(71) Applicant: Trinseo Europe GmbH, 8810 Horgen (CH)
(72) Inventor: Cheng, Kai Leung, Tsing Yi Island (HK); Lam, Charles, Tsing Yi Island (HK); Balan, Abidin, 4814VL Breda (NL); Lakeman, Pascal, 4816A AW Breda (NL); Li, Yichen, Taoyuan City (TW)
(74) Representative: Hoffmann Eitle

(57) **Abstract**

Disclosed are polycarbonate compositions which exhibit high levels of flame retardance and excellent physical properties which do not contain alkali metal salts of perfluoro alkane sulfonates. Disclosed are methods of preparing such compositions. Disclosed are structures prepared from the disclosed compositions. The compositions comprise: a) at least one polycarbonate polymer; b) an impact modifier comprising a silicone core; and c) a phosphazene-based flame retardant. The compositions may comprise a polyarylate, or at least a portion of the at least one polycarbonate is a high temperature polycarbonate.

## Description

### TECHNICAL FIELD

Disclosed are polycarbonate compositions which exhibit high levels of flame retardance and excellent physical properties which do not contain alkali metal salts of perfluoro alkane sulfonates. Disclosed are methods of preparing such compositions. Disclosed are structures prepared from the disclosed compositions.

### BACKGROUND

Polycarbonate and copolymers containing carbonate units are utilized in a variety of molded structures. Polycarbonates and copolymers containing carbonate units form molded structures that are rigid. The molded structures may be used for a variety of uses, including cases for electronics, automobile parts, medical devices, home appliances, loud-speakers, home furnishings and the like. Fire retardancy of such structures is an important safety consideration. The market demands improved fire retardancy while maintaining the premium properties of molded structures. Some polycarbonate formulations contain charring salts, salts of a perflourohydrocarbyl sulfur compounds or aromatic sulfur compounds, to improve the flame retardance of the compositions, see US Patent Publication 2020/0354569 incorporated by reference for all purposes. Some regulatory authorities consider such as compounds as being potentially harmful. There is a demand to recycle used polycarbonate or copolymers thereof. The use of recycled polycarbonate or copolymers thereof in molded products is desired, provided the structures provide fire retardancy and maintain premium properties. Recycled polycarbonates and copolymers thereof may be sourced from post-consumer waste such as water bottles, soda bottles and the like. Significant progress has been made in developing polycarbonate formulations containing post -consumer recycled polycarbonates, see WO2019/115506 which discloses laminates containing fiber-based layers and layers based on polycarbonates wherein up to fifty percent of the polycarbonates present may be post-consumer recycled polycarbonates. Many users of polycarbonates desire to use polycarbonates with higher post-consumer recycle content, that do not contain compounds which regulatory authorities consider as potentially harmful and demand that the flame retardant properties achieve a UL rating of V-0 with the excellent physical properties of virgin polycarbonate.

What is needed are compositions which do not contain compounds which regulatory authorities deem as potentially harmful, which may contain high levels of post-consumer recycled polycarbonates, and which form molded structures having the desired fire retardancy while maintaining the premium properties of molded products containing polycarbonates, such as excellent tensile strength at yield, tensile strength at break, tensile elongation at yield, tensile elongation at break and Notched Izod impact strength, and the like. What are also needed are molded compositions prepared from such compositions that exhibit improved fire retardancy, do not contain compounds deemed as potentially harmful and exhibit premium properties as discussed.

### SUMMARY

Disclosed are compositions comprising: a) at least one polycarbonate polymer; b) an impact modifier comprising a silicone core; and c) a phosphazene-based flame retardant. The compositions may comprise a polyarylate, or at least a portion of the at least one polycarbonate is a high temperature polycarbonate. The disclosed compositions may comprise about 90 percent by weight or greater of the at least one polycarbonate polymer. The at least one polycarbonate polymer may comprise from about 0 to about 95 weight percent linear polycarbonate. The at least one polycarbonate may comprise at least one of; a polycarbonate having a low melt flow rate; a polycarbonate having a medium melt flow rate; and a polycarbonate having a high melt flow rate. The low melt flow rate may be from about 0.1 to about 5 g/10 minutes. The medium melt flow rate may be from about 5 to about 15 g/10 min. The high melt flow rate may be greater than about 15 g/10 min. Melt flow rate may be measured according to ASTM D1238. The composition may comprise a mixture of virgin and post-consumer recycled polycarbonates. The melt flow rate of the post-consumer recycled polycarbonates and/or the virgin polycarbonates may be from about 1 to about 30 grams per 10 minutes according to ASTM D1238. The at least one polycarbonate polymer may comprise about 50% to 90% by weight of high temperature polycarbonate. The high temperature polycarbonate may have a glass transition temperature of about 150 °C or greater as determined by Differential Scanning Calorimetry according to ASTM Test Method D 746-52 T. A portion of the at least one polycarbonate polymer may be a post-consumer recycled polymer. The polyarylate may have a molecular weight of about 10,000 to about 150,000 amu (atomic mass units). The composition may comprise about 3.0 percent by weight or less of the impact modifier based on the weight of the composition. The impact modifier may contain about 20 to about 70 percent by weight of a silicone core component based on the weight of the composition. The composition may comprise about 5.0 percent by weight or less of phosphazene-based flame retardant based on the weight of the composition. The composition may not contain charring salts, for example salts of a perflourohydrocarbyl sulfur compounds or aromatic sulfur compounds.

The composition may comprise an anti-drip agent. The composition may comprise one or more non-halogenated flame retardants. The composition may comprise one or more one or more antioxidants. The composition may comprise one or more one or more UV absorbers. The composition may comprise one or more mold release agents. The composition may comprise one or more one or more colorants. The composition may comprise from about 0.1 to 0.9 percent by weight of the anti-drip agent based on the weight of the composition. The composition may comprise about 0.1 to 1 percent by weight of the mold release agent based on the weight of the composition. The composition may comprise about 0.05 to 0.5 percent by weight of the antioxidant based on the weight of the composition. The composition may comprise about 0.1 to 0.3 percent by weight of the UV stabilizer based on the weight of the composition.

The composition may comprise: from about 60 to about 93 weight percent of at least one polycarbonate polymer; from about 0.1 to about 3.0 weight percent of impact modifier comprising a silicone core; from about 1.0 to about 5.0 weight percent of the phosphazene-based flame retardant; from about 0 to about 30 weight percent of the polyarylate; from 0 to about 0.5 weight percent of the anti-drip agent; from 0 to about 0.5 weight percent of the mold release agent; from 0 to about 0.2 weight percent of the antioxidant; from 0 to about 0.5 weight percent of the UV stabilizer; and from 0 to about 10 weight percent colorant; wherein from 0 to about 90 percent of the at least one polycarbonate polymer is high temperature polycarbonate; and the weight percentage is based on the weight of the composition.

Disclosed are articles prepared from the compositions disclosed herein.

Disclosed is a method comprising a) contacting the elements of any one of the compositions disclosed herein with intimate mixing at a temperature of about 250 °C or greater for about 10 seconds or greater, b) filling a mold with the mixed composition of a), and c) allowing the composition in the mold to form a solid article, and d) removing the formed article from the mold. The contacting with mixing may be performed in an extruder and the formed mixture may be moved from the extruder to a mold.

The compositions and structures prepared from such compositions disclosed may contain high amounts of post-consumer recycled content. The composition may not contain charring salts, for example salts of a perflourohydrocarbyl sulfur compounds or aromatic sulfur compounds. The articles prepared from the compositions achieve UL94 V0@1.0 mm flame retardancy. The articles prepared from the compositions achieve UL94 V0@1.0 mm flame retardancy after water immersion. The articles prepared from the compositions a heat deflection temperature of above 110 °C, 120 °C or 125 °C, at 1.8 MPa according to ASTM D648. The articles may be used in automobiles, trains, buses, recreation vehicles (RVs) and the like.

### DETAILED DESCRIPTION

While the disclosure has been described in connection with certain embodiments, it is to be understood that the disclosure is not to be limited to the disclosed embodiments and is intended to cover various modifications and equivalent arrangements included within the scope of the appended claims, which scope is to be accorded the broadest interpretation to encompass all such modifications and equivalent structures as is permitted under the law.

One or more as used herein means that at least one, or more than one, of the recited components may be used as disclosed. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified. Tg is the temperature or temperature range at which a polymeric material shows an abrupt change in its physical properties, including, for example, mechanical strength. Tg can be determined by differential scanning calorimetry (DSC) according to ASTM Test Method D 746-52 T. Post-industrial as used herein refers to a source of a material that originates during the manufacture of a good or product. Post-consumer as used herein refers to a source of material that originates after the end consumer has used the material in a consumer good or product.

Disclosed are compositions which comprise a) at least one polycarbonate polymer; b) an impact modifier comprising a silicone core; and c} a phosphazene-based flame retardant. The composition may contain one or more post-consumer recycled polycarbonates, up to 95 percent by weight of the composition. The disclosed compositions may contain virgin polycarbonate. Virgin polycarbonate is polycarbonate which has not been used in any previous composition. The composition may not contain charring salts, for example salts of a perflourohydrocarbyl sulfur compounds or aromatic sulfur compounds. The composition may contain one or more non-halogenated flame retardants, one or more antioxidants, one or more UV Absorbers, one or more impact modifiers, one or more mold release agents and/or one or more colorants.

Polycarbonate as used herein means a polymer containing carbonate units. Such polymers may be homopolymers consisting essentially of carbonate monomer units or copolymers containing one or more other monomer units (co-monomer units) and carbonate units. Such copolymers may be block copolymers containing two or more blocks of different monomer units or may be random copolymers with the different monomer units randomly located along the polymer backbone. The other monomer units may comprise any monomer units that do not negatively impact the inherent properties of polycarbonates, for instance heat resistance, impact resistance, moldability, flexural modulus, bending strength, haze, and transparency, where required for the intended use. Among exemplary comonomer units are ester units, polysiloxane units, and the like. The amount of carbonate monomer units in copolycarbonates is selected such that the resulting polymer retains the desirable properties of polycarbonates, as disclosed herein. The copolycarbonates may contain greater than 50 mole percent carbonate monomer units, about 75 mole percent or greater carbonate monomer units, about 80 mole percent or greater carbonate monomer units or about 85 mole percent or greater carbonate monomer units. The copolycarbonates may contain about 99 mole percent or less carbonate monomer units, about 97 mole percent or less carbonate monomer units or about 95 mole percent or less carbonate monomer units. The copoly-carbonates may contain about 1 mole percent or greater co-monomer monomer units, about 3 mole percent or greater co-monomer monomer units or about 5 mole percent or greater co-monomer monomer units. The copolycarbonates may contain less than 50 mole percent co-monomer monomer units, about 25 mole percent or less co-monomer monomer units, about 20 mole percent or less co-monomer monomer units or about 15 mole percent or less co-monomer monomer units. The polycarbonate units may contain aromatic units in the backbone of the polymer.

The production of polycarbonates is affected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols. Diphenols useful to produce the aromatic polycarbonates and/or aromatic polyester carbonates may correspond to formula I 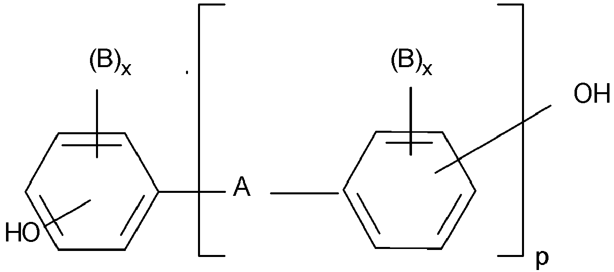 wherein A denotes a single bond, a C ₁₋₅ alkylene, a C ₂₋₅ alkylidene, a C ₅₋₆ cycloalkylidene, -O-, -SO-, -CO-, -S-, -SO₂-, or a C ₆₋₁₂ arylene, on to which other aromatic rings, which optionally contain hetero atoms, can be condensed, or a radical of formula II: 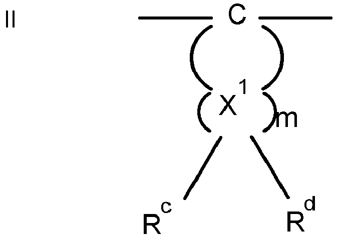 or III 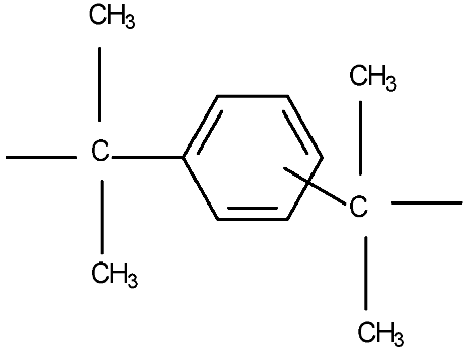 wherein B in each case is independently hydrogen, a C ₁₋₁₂ alkyl, preferably methyl, or a halogen, preferably chlorine and/or bromine;
x in each case is mutually independently 0, 1, or 2; and
p is 0 or 1:
R^{c} and R^{d} are mutually independent of each other and are individually selectable for each X¹ and are hydrogen or a C₁ - C₆ alkyl, preferably hydrogen, methyl or ethyl;
X¹ denotes carbon; and
m denotes an integer from 4 to 7, preferably 4 or 5, with the proviso that R^{c} and R^{d} simultaneously denote an alkyl on at least one X¹ atom.

Exemplary diphenols are hydroquinone, resorcinol, dihydroxybiphenyls, bis (hydroxyphenyl)-C ₁₋₅ alkanes, bis(hydroxyphenyl)-C ₅₋₆ cycloalkanes, bis(hydroxyl-phenyl) ethers, bis(hydroxyphenyl)sulfoxides, bis(hydroxyphenyl)ketones, bis(hydroxyl-phenyl) sulfones and 4,4"-bis(hydroxyphenyl)diisopropylbenzenes, as well as derivatives thereof which have brominated and/or chlorinated nuclei. Diphenols which are particularly preferred are 4,4'-dihydroxybiphenyl, bisphenol A, 2,4-bis(4-hydroxyphenyl)-2-methylbutane, 1,1-bis (4-hydroxyphenyl)-cyclohexane, 1,1-bis(4-hydroxyphenyl)-3,3,5-trimethylcyclohexane, 4,4-dihydroxydiphenyl sulfide and 4,4-dihydroxydiphenyl sulfone, as well as di- and tetra-brominated or chlorinated derivatives thereof, such as 2,2-bis(3-chloro-4-hydroxy-phenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl) propane (bisphenol A) is particularly preferred. The diphenols can be used individually or as arbitrary mixtures. The diphenols are known in the literature or can be obtained by methods known in the literature. Apart from bisphenol A homopolycarbonates, exemplary polycarbonates include copolycarbonates of bisphenol A with up to 15 mole percent, with respect to the molar sums of the diphenols, of other diphenols which are disclosed, such as 2,2-bis(3,5-dibromo-4-hydroxyphenyl)-propane.

Exemplary chain terminators for the production of the polycarbonates include phenolic compounds, exemplary phenolic compounds include phenol, p-chlorophenol, p-tert-butylphenol, 4-(1,3-dimethyl-butyl)-phenol and 2,4,6-tribromophenol; long chain alkyl phenols, such as monoalkylphenols or dialkylphenols which contain a total of 8 to 20 carbon atoms in their alkyl substituents, exemplary are 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol. The amount of chain terminators used may be about 0.1 mole percent or greater based on the molar sum of the diphenols used in each case. The amount of chain terminators used may be about 10 mole percent or less based on the molar sum of the diphenols used in each case.

The polycarbonates can be branched, for example by the incorporation of about 0.05 to about 2.0 mole percent, with respect to the sum of the diphenols used, of trifunctional compounds or of compounds with a functionality higher than three, for example those which contain four or more phenolic groups. Branched polycarbonates useful for the compositions disclosed can be prepared by known techniques, for example several methods are disclosed in USP 3,028,365; 4,529,791; and 4,677,162; which are hereby incorporated by reference in their entirety. Exemplary branching agents include tri- or multi-functional carboxylic acid chlorides, such as trimesic acid trichloride, cyanuric acid trichloride, 3,3'-,4,4'-benzophenone tetracarboxylic acid tetra chloride, 1,4,5,8-naphthalenetetracarboxylic acid tetrachloride or pyromellitic acid tetra chloride, in amounts of about 0.01 to about 1.0 mole percent (with respect to the dicarboxylic acid dichlorides used) or tri-or multi-functional phenols such as phloroglucinol, 4,6-dimethyl-2,4,6-tris(4-hydroxyphenyl)-2-heptene, 4,4-dimethyl-2,4,6-tris (4-hydroxy phenyl) heptane, 1,3,5-tris(4-hydroxyphenyl)-benzene, 1,1,1-tris(4-hydroxy phenyl)ethane, tris(4-hydroxyphenyl)-phenylmethane, 2,2-bis[4,4-bis(4-hydroxyphenyl) cyclohexyl]propane, 2,4-bis[1-(4-hydroxyphenyl)-1-methyl-ethyl]phenol, tetrakis(4-hydroxy phenyl)-methane, 2,6-bis(2-hydroxy-5-methyl-benzyl)-4-methyl-phenol, 2-(4-hydroxyphenyl) -2-(2,4-dihydroxyphenyl)propane, or tetrakis(4-[1-(4-hydroxyphenyl)-1-methylethyl]-phen-oxy)-methane in amounts of about 0.01 to about 1.0 mole percent with respect to the diphenols used. Phenolic branching agents can be placed in the reaction vessel with the diphenols. Acid chloride branching agents can be introduced together with the acid chlorides.

Copolycarbonates may be prepared by known processes. For example, about 1 to about 25 parts by weight, about 2.5 to about 25 parts by weight (with respect to the total amount of diphenols to be used) of polydiorganosiloxanes comprising hydroxy-aryloxy terminal groups can also be used. These are known (see, USP 3,419,634) or can be produced by methods known in the literature. The ester forming monomers may be utilized in the polycarbonate containing polymer preparation process. Exemplary ester forming monomers include dicarboxylic acid halides and hydroxycarboxylic acids. The aromatic dicarboxylic acid dihalides used for the production of the aromatic polyester carbonates may be the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio from about 1:20 to about 20:1 may be used. A carbonic acid halide, such as phosgene, may be used in conjunction as a difunctional acid derivative during the production of the polyester carbonates. The aromatic polyester carbonates may also contain incorporated hydroxycarboxylic acids. The polyester carbonates may be either linear and/or may be branched. Branching agents are disclosed above.

Apart from the monophenols, exemplary chain terminators include chlorocarboxylic acid esters, as well as the acid chlorides of aromatic monocarboxylic acids which may optionally be substituted by C ₁₋₂₂ alkyl groups, or by halogen atoms, and also may include aliphatic C ₂₋₂₂ monocarboxylic acid chlorides. The amount of chain terminator may be about 0.1 to about 10 mole percent, with respect to the moles of diphenols in the case of phenolic chain terminators and with respect to the moles of dicarboxylic acid dichlorides in the case of monocarboxylic acid chloride chain terminators.

The polycarbonates or copolymers containing carbonate units may be derived from recycled materials, such as post-consumer recycled materials. The composition may contain up to 95 percent by weight of the composition recycled polycarbonates, such as post consumer recycled materials, about 90 percent by weight or less based on the composition or about 80 percent by weight or less. The composition may contain about 30 percent by weight or more of recycled polycarbonate based on the weight of the composition, about 50 percent or more, about 75 percent by weight or more or about 90 percent by weight or more. Virgin material as used herein refers to material that has not been previously used. The recycled material may be linear, branched or a mixture thereof. The recycled material may be branched. The recycled material may be in flake form. The recycled material may be recycled from bottles or other structures wherein the used structures are shredded into flake form. The recycled material can be formed into other structures such as pellets. The use of the recycled material in flake form is the most efficient way to utilize the material. The recycled polycarbonates or copolymers containing carbonate units may contain impurities such as polyesters, for instance 0.1 to 1.0 or 0.1 to 0.25 percent by weight based on the recycled polycarbonates or copolymers containing carbonate units.

The composition may contain virgin polycarbonates or copolymers containing carbonate units in an amount of about 5 percent by weight or greater based on the composition, about 10 percent by weight or greater, about 20 percent by weight or greater, about 30 percent by weight or greater or about 40 percent by weight or greater. The composition may contain virgin polycarbonates or copolymers containing carbonate units in an amount of about 99 percent by weight or less based on the composition, about 95 percent by weight or less, about 65 percent by weight or less, about 45 percent by weight or less, about 35 percent by weight or less or about 25 percent by weight or less.

The one or more polymers containing carbonate monomer units can comprise polycarbonates, co-polycarbonates or blends of polycarbonates and co-polycarbonates. The polycarbonates and/or co-polycarbonates may exhibit a weight average molecular weight sufficient to provide the desired properties to articles prepared from the polycarbonates and/or co-polycarbonates. The polycarbonates and/or co-polycarbonates may have a weight average molecular weights of about 5,000 amu or greater, about 15,000 amu or greater or about 20,000 amu or greater. The polycarbonates and/or co-polycarbonates may have a weight average molecular weight of about 40,000 amu or less, about 35,000 amu or less, or about 30,000 amu or less. Unless otherwise indicated, the polycarbonate and/or co-polycarbonate "molecular weight" herein refer to weight average molecular weights (Mw) determined by gel permeation chromatography (GPC) using laser scattering techniques with a bisphenol A polycarbonate standard and is given in units of grams per mole (g/mole).

The polycarbonates and/or copolymers used to prepare the compositions disclosed may have melt flow rates which provide the desired processing properties. A mixture of polycarbonates and/or copolymers containing carbonate units with differing melt flow rates may be used to provide a composite melt flow rate to enhance processing of the compositions disclosed. The mixture of polycarbonates and/or copolymers containing carbonate units having different melt flow rates may contain polycarbonates and/or copolymers containing carbonate units having low melt flow rates, polycarbonates and/or copolymers containing carbonate units having medium melt flow rates and polycarbonates and/or copolymers containing carbonate units having high melt flow rates. Melt flow rates are determined by measuring the grams of a material which passes through a capillary having a diameter of 25.4 mm in a ten-minute period at 300 ° C under a load of 1.2, kilograms, measured according to ASTM D1238. The melt flow rates of the disclosed compositions may be about 1 gram/10 minutes or greater, about 3 grams/10 minutes or greater, about 5 grams/10 minutes or greater, 10 grams/10 minutes or greater or about 15 grams/10 minutes or greater. The melt flow rates of the disclosed compositions may be about 70 grams/10 minutes or less, about 30 grams/10 minutes or less, about 28 grams/10 minutes or less, about 22 grams/10 minutes or less, about 20 grams/10 minutes or less or about 10 grams/10 minutes or less. The melt flow rates of the disclosed compositions may be from about 3 grams/10 minutes to about 30 grams/10 minutes. The test protocol is based on ASTM D1238. The plastometer has a capillary diameter of 9.5504 mm and bore die size of 2.095 mm. The low melt flow rate may be from about 0.1 to about 5 g/10 minutes; the medium melt flow rate may be from about 5 to about 15 g/10 min; and the high melt flow may be greater than about 15 g/10 min.

The composition may contain one or more resins having a high Tg. Any resin which exhibits a high Tg and which blends with polycarbonates wherein the blends provide the desired properties as disclosed in this application may be used. In this context high Tg may be about 150 °C or greater, about 160 °C or greater, or about 190 °C or greater. The High Tg resin may be one or more high Tg polycarbonates, one or more polyarylates, and the like.

Polyarylates are copolymers of aromatic dicarboxylic acids and bisphenols. Exemplary aromatic esters are isophthalic, terephthalic acids. Exemplary bisphenols include Bisphenol A and Bisphenol F. The polyarylates may have a Tg of about 180 °C or greater, or about 200 °C or greater. The polyarylates may have a weight average molecular weight of about 10,000 amu or greater, about 50,000 amu or greater or about 100,000 amu or greater. The polyarylates may have a weight average molecular weight of about 150,000 amu or less, about 120,000 amu or less or about 100,000 amu. The polyarylates may be present in the composition in an amount sufficient to provide the desired properties of the composition. The polyarylates may be present in the composition in an amount of 0 percent based on the weight of the composition or greater, about 10 percent by weight or greater or about 30 percent by weight or greater. The polyarylates may be present in the composition in an amount of 40 percent based on the weight of the composition or less, 30 percent by weight or less, about 20 percent by weight or less or about 10 percent by weight or less.

High temperature polycarbonates may be any polycarbonate which has a Tg which enhances the properties of the compositions and articles prepared form the compositions. The high temperature polycarbonates may have a Tg of about 150 °C or greater, about 170 °C or greater or about 190 or greater. Exemplary high temperature polycarbonates may include polyarylates which can be obtained from Unitika. The high temperature polycarbonates may be present in the composition in an amount sufficient to provide the desired properties of the composition. The high temperature polycarbonates may be present in the composition in an amount of 0 percent based on the weight of the composition or greater, about 10 percent by weight or greater or about 50 percent by weight or greater. The high temperature polycarbonates may be present in the composition in an amount of 90 percent based on the weight of the composition or less, about 60 percent by weight or less, about 50 percent by weight or less or about 10 percent by weight or less. The high temperature polycarbonates may be present in the composition in an amount of 0 percent based on the weight of the polycarbonate present or greater, about 10 percent by weight or greater or about 50 percent by weight or greater. The high temperature polycarbonates may be present in the based on the weight of the polycarbonate present in an amount of 90 percent by weight or less, about 50percent by weight or less or about 10 percent by weight or less.

The compositions may contain one or more silicon compounds having a branched chain structure and organic functional groups. Any silicon compounds having a branched chain structure and organic functional groups which enhances the flame retardant properties of the composition may be used. A silicone compound containing a branched main chain and containing organic functional groups may be represented by the general formula: 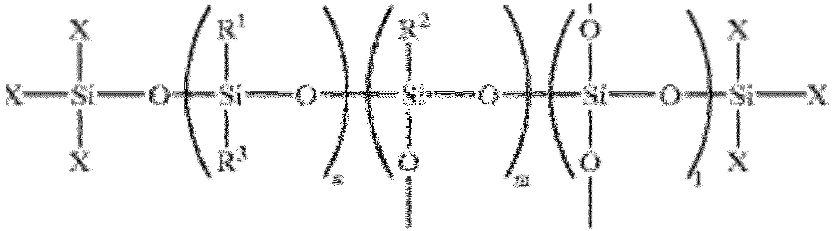 in the formula R¹, R² and R³ represent the organic functional groups on the main chain and X represents terminal functional groups while n, m and 1 represent the number of moles of individual units wherein said organic functional groups comprise aromatic groups or aromatic groups and hydrocarbon groups (other than aromatic groups) may be used as the silicone compound.

The silicone compound may contain at least 20 mole percent of T units (RSiO _{1.5}) and/or Q units (SiO _{2.0}) based on the total siloxane units (R ₃₋₀ SiO _{2-0.5}), wherein R represents an organic functional group. At least 20 mole percent of the organic functional groups contained in the silicone compound may be aromatic groups. The aromatic groups present may be phenyl, biphenyl, naphthalene or their derivatives, or may be phenyl. The side chains that are not phenyl groups may be hydrocarbon groups containing no more than four carbon atoms, or methyl groups. The terminal groups may be a methyl group, phenyl group and hydroxyl group. The weight average molecular weight of the silicone compound may be from about 3,000 amu or greater or about 5,000 amu or greater. The weight average molecular weight of the silicone compound may be about 500,000 amu or less, or about 270,000 or less. The amount of the silicone compound may be about 0.01 percent by weight based on the weight of the composition or greater, or about 0.5 percent by weight or greater. The amount of the silicone compound may be about about 3 percent by weight or less based on the weight of the composition, or from about 1.5 percent by weight or less.

The composition may further comprise a fluorinated antidrip agent. Antidrip means to reduce the tendency of the composition to form burning drips in the event of a fire. Fluorinated polyolefins known in the art as antidrip agents may be used in the compositions. The anti-drip agent may be a fiber-forming fluorine-containing polymer, those forming a fibril construction in polycarbonate containing compositions. Fiber-forming fluorine-containing polymers include polytetrafluoroethylene, tetrafluoroethylene type copolymers (for example, tetrafluoroethylene/hexafluoropropylene copolymers and the like), the partially fluorinated polymers shown in U.S. Pat. No. 4,379,910, relevant parts incorporated herein by reference, polycarbonates manufactured from fluorinated diphenol and the like. Polytetrafluoroethylenes having a molecular weight of at least 1,000,000, a secondary particle size of at least 100 µm and an ability to form fibrils may be used. Exemplary fluorinated polyolefins are described in EP-A 0 640 655. They are marketed under the brand name Teflon^{®} 30N by DuPont.

The compositions disclosed may contain one or more metal or metalloid oxides. Any metal oxide which enhances the flame retardancy rating of V0@1.4 mm, may be utilized. Exemplary metal or metalloid oxides include group 3 or 4 metal or mettaloid oxides. Exemplary metal or metalloid oxides include TiO₂, MgO, SiO₂, Fe₂O₃, Al₂O₃ and the like. Exemplary metal or metalloid oxides include TiO₂, MgO and SiO₂. The one or more metal or metalloid oxides may be a mixture of metal or metalloid oxides, such as talc which contains MgO and SiO₂. The one or more metal or metalloid oxides may be present in an amount of about 0.2 weight percent by weight or greater based on the weight of the composition, about 0.3 percent by weight or greater or about 0.5 percent by weight or greater. The one or more metal or metalloid oxides may be present in an amount of about 10 weight percent by weight or less based on the weight of the composition, about 5 percent by weight or less, about 3 percent by weight or less or about 2 percent by weight or less. The one or more metal or metalloid oxides may be nanoparticles. The particle size may be any particle size that which enhances the flame retardancy rating of the compositions. The particle size may be about 0.2 micrometers or more or about 0.35 micrometers. The particle size may be about 2.0 micrometers or less or about 1.0 micrometers or less. The particle size may be determined using the laser diffraction technique described in ISO13322.

The compositions may contain one or more alkali metal phosphates. Any alkali metal phosphates which enhance the thermal stability of the compositions may be used. The alkali metal phosphates may be sodium or potassium metal phosphates. Exemplary alkali metal phosphates may be one or more of distearyl pentaerythritol diphosphate, mono or dihydrogen phosphate and mono-, di-, or trihydrogen phosphate compounds. Exemplary alkali metal phosphates may be one or more of mono-, di-, or trihydrogen phosphate compounds. The alkali metal phosphate may be sodium dihydrogen phosphate. The alkali metal phosphates may be used in any amount which enhances the thermal stability of the compositions. The alkali metal phosphates may be used in any amount of about 0.01 percent by weight or greater based on the weight of the composition, about 0.02 percent by weight or greater or about 0.03 percent by weight or greater. The alkali metal phosphates may be used in any amount of about 1.0 percent by weight or less based on the weight of the composition, about 0.2 percent by weight or less or about 0.1 percent by weight or less.

The compositions may contain one or more non-halogenated flame retardants commonly used in polycarbonate compositions. Non-halogenated means that there are no halogen atoms contained in the flame retardant. The use of non-halogenated flame retardants means that no halogens are released during combustion of the compositions containing non-halogenated flame retardants. The flame retardant may be any flame retardant known for use in polycarbonate-based compositions which provide flame retardant properties, and which do not negatively impact the impact, heat resistance, flexural modulus, bending strength, haze and transparency of the composition. Flame retardants may be used in a sufficient amount to meet the flame retardancy requirements for the final use and in an amount that does not deleteriously impact the properties of articles prepared from the compositions. Exemplary flame retardants include phosphorous containing compounds, such as oligomeric phosphates, poly(block-phosphonato-esters), and/or a poly(block-phosphonato-carbonates) see USP 7,645,850 which is incorporated in its entirety. Exemplary oligomeric phosphates include bisphenol-A bis(diphenyl phosphate) (BAPP). Exemplary additional fire retardants include 1, 3-phenylenetetrakis (2, 6-dimethylphenyl) ester (Daihachi PX-200).

The one or more non-halogenated flame retardants may be one or more phosphazenes. Any one or more phosphazenes which enhances fire retardancy may be used. The phosphazenes may comprise more than one phosphazene unit. A phosphazene is an organic compound having a -P=N- structure. The phosphazene may be a linear structure containing one or more phosphazene units or a cyclic structure containing structure containing one or more phosphazene units. The phosphorous atoms on the phosphazene structure may have bonded thereto one or more hydrocarbyloxy structures. The hydro-carbyloxy groups may be alkoxy, aryloxy, alkyl substituted aryloxy, alkoxy substituted aryloxy or halo substituted aryloxy. The hydrocarbyloxy groups may be aryloxy or alkyl substituted aryloxy. The hydrocarbyloxy groups may be phenoxyoxy or alkyl substituted phenoxy. The alkyl groups may be C ₁₋₁₀ alkyl, C ₁₋₃ alkyl or methyl or ethyl. The cyclic phosphazene compounds may contain 1 or more phosphazene units or 3 or more phosphazene units. The cyclic phosphazene compounds may contain 25 or less phosphazene units, 10 or less phosphazene units or 5 or less phosphazene units. The linear phosphazene compounds may contain 1 or more phosphazene units, 3 or more phosphazene units, 5 or more phosphazene units or 6 or more phosphazene units. The linear phosphazene compounds may contain 10,000 or less phosphazene units, 1,000 or less phosphazene units, 100 or less phosphazene units, or 25 or less phosphazene units. Exemplary cyclic phosphazenes include phenoxy cyclotriphosphazene, octaphenoxy cyclotetraphosphazene, and decaphenoxy cyclopentaphosphazene. Cyclic phosphazenes may be obtained by allowing ammonium chloride and phosphorus pentachloride to react at 120 to 130°C to obtain a mixture containing cyclic and straight chain chlorophosphazenes, extracting cyclic chlorophosphazenes such as hexachloro cyclotriphosphazene, octachloro cyclotetraphosphazene, and decachloro cyclopentaphosphazene, and then substituting it with a phenoxy group. Exemplary linear phosphazenes include compounds obtained by subjecting hexachloro cyclotriphosphazene, obtained by the above-described method, to ring-opening polymerization at 220 to 250°C, and then substituting thus obtained chainlike dichlorophosphazene having a degree of polymerization of 3 to 10,000 (or as described before) with phenoxy groups. The phosphazene compounds may be crosslinked. The phosphazene compounds may be crosslinked by a bisphenol compound such as a 4,4'-diphenylene group, such as a 4,4'-sulfonyldiphenylene (bisphenol S residue), 2,2-(4,4'-diphenylene), isopropylidene group, 4,4'-oxydiphenylene group, and 4,4'-thiodiphenylene group. The phenylene group content of the crosslinked phenoxyphosphazene compound is generally 50 to 99.9 weight percent or 70 to 90 weight percent. The crosslinked phenoxyphosphazene compound may be may not have any free hydroxyl groups in the molecule.

The one or more flame retardants may be present in an amount of about 0.1 percent by weight or greater based on the weight of the composition containing polycarbonates and/or copolymers containing carbonate units or about 1 percent by weight or greater or about 5 percent by weight or greater. The one or more flame retardants may be present in an amount of about 10 percent by weight or less based on the weight of the composition, about 5 percent by weight or less or about 2 percent by weight or less. The one or more phospahzene flame retardants may be present in an amount of about 0.1 percent by weight or greater based on the weight of the composition containing polycarbonates and/or copolymers containing carbonate units or about 1 percent by weight or greater or about 5 percent by weight or greater. The one or more flame retardants may be present in an amount of about 10 percent by weight or less based on the weight of the composition, about 5 percent by weight or less or about 2 percent by weight or less.

The disclosed compositions contain one of more antioxidants. Antioxidants may be introduced into the compositions from ingredients utilized, such as the impact modifiers and post-consumer recycled polymer. The antioxidants may be added to the compositions separately. The antioxidants may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants. The antioxidant may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants which do not contain sulfur containing groups.

Phenol based antioxidants include 2,6-di-tert-butyl-4-methylphenol; 2,6-diphenyl-4-methoxyphenol; 2,2'-methylenebis (6-tert-butyl-4-methylphenol); 2,2'-methylenebis(6-tert-butyl-4-methylphenol); 2,2'-methylene bis [4-methyl-6-(α-methylcyclohexyl)phenol]; 1,1-bis (5-tert-butyl-4-hdyroxy-2-methyl phenyl) butane; 2,2'-methylenebis(4-methyl-6-cyclohexyl phenol); 2,2'-methylenebis(4-methyl-6-nonylphenol); 1,1,3-tris(5-tert-butyl-4-hydroxy-2-methylphenyl) butane; 2,2-bis(5-tert-butyl-4-hydroxy-2-methylphenyl)-4-n-dodecylmercapto butane; ethylene glycol bis[3,3-bis(3-tert-butyl-4-hdyroxyphenyl) butyrate]; 1,1-bis(3,5-dimethyl-2-hydroxyphenyl)-3-(n-dodecylthio)butane; 4,4'-thiobis(6-tert-butyl-3-methyl phenol); 1,3,5-tris (3, 5-di-tert-butyl-4-hydroxybenzyl)-2,4,6-trimethylbenzene; dioctadecyl 2,2-bis(3,5-di-tert-butyl- 4-hydroxybenzyl)malonate ester; n-octadecyl-3-(4-hydroxy-3,5-di-tert-butylphenyl) propionate; tetrakis[methylene (3,5-di-tert-butyl-4-hydroxy hydrocinnamate) ]methane; and pentaerythritol tetrakis(3-(3,5-di-tert-butyl-4-hydroxyphenyl) propionate. Hydroquinone and alkylated hydroquinone-based antioxidants include 2,6-di-tert-butyl-4-methoxyphenol, 2,5-di-tert-butylhydroquinone, 2,5-di-tert-amylhydroquinone, 2,6-di phenyl 4-octadecyloxyphenol, 2,6-di-tert-butylhydroquinone, 2,5-di-tert-butyl-4-hydroxy anisole, 3,5-di-tert-butyl-4-hydroxyanisole, 3,5-di-tert-butyl-4-hydroxyphenyl stearate, bis (3,5-di-tert-butyl-4-hydroxyphenyl) adipate. Tocopherol based antioxidants include α-tocopherol, β-tocopherol, γ-tocopherol, δ-tocopherol and mixtures thereof (vitamin E). O- and N-benzyl compounds, based antioxidants include for example 3,5,3',5'-tetra-tert-butyl-4,4'-dihydroxydibenzyl ether, tris(3,5-di-tert-butyl-4-hydroxybenzyl) amine. Alkylidenebisphenol, based antioxidants include, 2,2'-methylenebis(6-tert-butyl-4-methyl phenol), 2,2'-methylenebis(6-tert-butyl-4-ethylphenol), 2,2'-methylenebis[4-methyl-6-(a-methyl cyclohexyl) phenol], 2,2'-methylenebis(4-methyl-6-cyclohexylphenol), 2,2'-methylene bis(6-nonyl-4-methylphenol), 2,2'-methylenebis(4,6-di-tert-butylphenol), 2,2'-ethylidenebis (4,6-di-tert-butylphenol), 2,2'-ethylidenebis(6-tert-butyl-4-isobutylphenol), 2,2'-methylene bis[6-(a-methylbenzyl)-4-nonylphenol], 2,2'-methylene bis[6-(α,α-dimethyl benzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl) butane, 2,6-bis(3-tert-butyl-5-methyl-2-hydroxybenzyl)-4-methylphenol, 1,1,3-tris(5-tert-butyl-4-hydroxy-2-methyl phenyl) butane, ethylene glycol bis[3,3-bis(3'-tert-butyl-4'-hydroxy phenyl)butyrate], bis[2-(3'-tert-butyl-2'-hydroxy-5'-methylbenzyl)-6-tert-butyl-4-methyl phenyl] terephthalate, 1,1-bis-(3,5-dimethyl-2-hydroxyphenyl)butane, 2,2-bis(3,5-di-tert-butyl-4-hydroxyphenyl)propane, 1,1,5,5-tetra(5-tert-butyl-4-hydroxy-2-methylphenyl) pentane. Hydroxybenzylated malonate based antioxidants include dioctadecyl-2,2-bis(3,5-di-tert-butyl-2-hydroxybenzyl)malonate, dioctadecyl-2-(3-tert-butyl-4-hydroxy-5-methyl benzyl)malonate, bis[4-(1,1,3,3-tetramethyl butyl)phenyl]-2,2-bis(3,5-di-tert-butyl-4-hydroxy benzyl)malonate. Aromatic hydroxybenzyl based antioxidants include 1,3,5-tris(3,5-di-tert-butyl-4-hydroxybenzyl)-2,4,6-trimethyl benzene, 1,4-bis(3,5-di-tert-butyl-4-hydroxybenzyl)-2,3,5,6-tetramethylbenzene, 2,4,6-tris (3,5-di-tert-butyl-4-hydroxybenzyl)phenol. Triazine compounds based antioxidants include 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenyl propionyl)-hexahydro-1,3,5-triazine and 1,3,5-tris(3,5-dicyclohexyl-4-hydroxybenzyl) isocyanurate. Benzylphosphonates, based antioxidants include dimethyl-2,5-di-tert-butyl-4-hydroxybenzylphosphonate, diethyl-3,5-di-tert-butyl-4-hydroxybenzylphosphonate, diocta decyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid. Acylaminophenol based antioxidants include, for example 4-hydroxylauranilide, 4-hydroxystearanilide, octyl N-(3,5-di-tert-butyl-4-hydroxyphenyl) carbamate. Exemplary antioxidants include esters of D-(3,5-di-tert-butyl-4-hydroxyphenyl) propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane. Exemplary antioxidants include esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl) oxamide, 3-thia undecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane. Exemplary antioxidants include esters of β-(3,5-dicyclohexyl-4-hydroxy phenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris (hydroxyethyl) isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane.Exemplary antioxidants include esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane.Exemplary antioxidants include amides of β-(3,5-di-tert-butyl-4-hydroxyphenyl) propionic acid e.g. N,N'-bis(3,5-di-tert-butyl-4-hydroxyphenylpropionyl) hexamethylene diamide, N,N'-bis(3,5-di-tert-butyl-4-hydroxyphenylpropionyl) tri methylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®} XL-1, supplied by Uniroyal).An exemplary antioxidant is ascorbic acid (vitamin C).Aminic antioxidants include N,N'-di-isopropyl-p-phenylenediamine, N,N'-di-sec-butyl-p-phenylene diamine, N,N'-bis(1,4-dimethylpentyl)-p-phenylenediamine, N,N'-bis(1-ethyl-3-methylpentyl) -p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylene diamine, N-isopropyl-N'-phenyl-p-phenylenediamine, N-(1,3-dimethyl butyl)-N'-phenyl-p-phenylenediamine, N-(1-methylheptyl)-N'-phenyl-p-phenylenediamine, N-cyclohexyl-N'-phenyl-p-phenylenediamine, N,N'-dimethyl-N,N'-di-sec-butyl-p-phenylene diamine, diphenylamine, N-allyldiphenylamine, 4-isopropoxydiphenylamine, N-phenyl-1-naphthyl amine, N-(4-tert-octylphenyl)-1-naphthylamine, N-phenyl-2-naphthylamine, octylated diphenylamine, p,p'-di-tert-octyldiphenylamine, 4-n-butylaminophenol, 4-butyryl amino phenol, 4-nonanoylaminophenol, 4-dodecanoylaminophenol, 4-octa decanoyl aminophenol, bis(4-methoxyphenyl)amine, 2,6-di-tert-butyl-4-dimethylaminomethylphenol, 2,4'-diamino diphenylmethane, 4,4'-diaminodiphenylmethane, N,N,N',N'-tetramethyl-4,4'-diamino diphenyl ethane, 1,2-bis[(2-methylphenyl)amino]ethane, 1,2-bis(phenylamino) propane, (o-tolyl)biguanide, bis[4-(1',3'-dimethylbutyl)phenyl]amine, tert-octylated N-phenyl-1-naphthyl amine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl /isohexyl diphenylamines, a mixture of mono- and dialkylated tert-butyldiphenylamines, N,N,N',N'-tetraphenyl-1,4-diaminobut-2-ene, N,N-bis(2,2,6,6-tetramethylpiperid-4-yl-hexa methylene diamine, bis(2,2,6,6-tetramethylpiperid-4-yl)sebacate, 2,2,6,6-tetramethyl piperidin-4-one, 2,2,6,6-tetramethylpiperidin-4-ol. Phosphoric antioxidants include tetrakis(2,4-di-t-butyl phenyl)-4,4-biphenylene phosphonite, tris(2,4-di-t-butylphenyl) phosphite, 2,2'-methylene bis(4,6-di-t-butylphenyl) octyl phosphite, bis(2,4-di-t-butylphenyl)pentaerythritol diphosphite, bis(2,6-di-t-butyl-4-methylphenyl)pentaerythritol diphosphite, di(nonylphenyl)pentaerythritol diphosphite, phenyl-bisphenol A-pentaerythritol diphosphite, distearylpentaerythritol diphosphite, dioctylpentaerythritol diphosphite, dilaurylpentaerythritol diphosphite, diphenylpentaerythritol diphosphite, dicyclohexylpentaerythritol diphosphite, bis(2,4,6-tri-t-butylphenyl) pentaerythritol diphosphite, 2,2'-ethylidenebis(4,6-di-t-butylphenyl) fluorophosphite, trisindecyl phosphite, trisdodecyl phosphite, phenylisooctyl phosphite, phenylindecyl phosphite, phenyldodecyl phosphite, diphenylisooctyl phosphite, diphenylisodecyl phosphite, diphenyldodecyl phosphite, triphenyl phosphite, tris(monononylphenyl) phosphite and tris(dinonylphenyl)phosphite. The antioxidant may be octadecyl 3,5-di-(tert)-butyl-4-hydroxyhydrocinnamate which is commercially available as IRGANOX 1076 from BASF.

Exemplary antioxidant additives include, for example, organophosphites such as tris(nonyl phenyl)phosphite, tris(2,4-di-t-butylphenyl)phosphite (e.g., "IRGAFOS 168" or "1-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydro cinnamate) methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecyl-thiodipropionate, octadecyl-3-(3,5-di-tert-butyl-4-hydroxy phenyl)propionate, pentaerythrityl-tetrakis[3-(3,5-di-tert-butyl-4-hydroxyphenyl) propionate or the like; amides of beta-(3,5-di-tert-butyl-4-hydroxyphenyl)-propionic acid or the like, or combinations comprising at least one of the foregoing antioxidants.

The antioxidants may be one or more of phenol and/or phosphorous based antioxidants. The antioxidants may be at least one of tris(2,4-di-tert-butylphenyl)phosphite and Octadecyl 3-(3,5-di-tert-butyl-4-hydroxyphenyl)propionate.

The antioxidants may be present in the compositions and structures formed therefrom in any amount which retards oxidation of the polymers. The antioxidants may be present in an amount based on the weight of the compositions disclosed of about 100 parts per million or greater, about 200 parts per million or greater (0.02 weight percent), about 300 parts per million or greater (0.03 weight percent), about 500 parts per million or greater (0.05 weight percent) or about 1000 parts per million or greater (0.1 weight percent). The antioxidants may be present in an amount based on the weight of the compositions disclosed of about 10,000 parts per million or less (1.0 weight percent) about 8,000 parts per million or less (0.8 weight percent), about 6,000 parts per million or less (0.6 weight percent), about 5,000 parts per million or less (0.5 weight percent) or about 2,000 parts per million or less (0.2 weight percent).

The compositions may contain mold release agents. Exemplary mold release agents include any mold release agent known in the art and combinations thereof. The mold release agents may be internal mold release agents. The mold release agents may include one or more compatibilizing agents such as are taught in now expired United States patent US5,212,209A which is incorporated herein by reference in its entirety for all purposes. Exemplary classes of mold release agent include aliphatic carboxylic acids; esters of an aliphatic carboxylic acid and an alcohol; aliphatic hydrocarbon compounds having a number average molecular weight of 200 to 15,000; and polysiloxane-based silicone oils. Examples of the aliphatic carboxylic acids include saturated or unsaturated, aliphatic monovalent, divalent, or trivalent carboxylic acids. The aliphatic carboxylic acids also include alicyclic carboxylic acids. The aliphatic carboxylic acids may be C ₆₋₃₆ monovalent or divalent carboxylic acids. The aliphatic carboxylic acids may be C ₆₋₃₆ aliphatic saturated monovalent carboxylic acids. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, and azelaic acid. Examples of the aliphatic carboxylic acid in the esters of an aliphatic carboxylic acid and an alcohol include the same aliphatic carboxylic acids as described above. Examples of the alcohol include saturated or unsaturated, monohydric or polyhydric alcohols, which may have a substituent such as a fluorine atom or an aryl group. The alcohols may be monohydric or polyhydric, saturated alcohols having a carbon number of not more than 30. The alcohols may be aliphatic saturated monohydric alcohols and aliphatic saturated polyhydric alcohols having a carbon number of not more than 30. The term "aliphatic" herein is used as a term also including alicyclic compounds. Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol. Each of the above esters may be either a pure substance or a mixture of a plurality of compounds. Each of the aliphatic carboxylic acid and the alcohol bound to each other to constitute one ester may be of a single type, or two or more types thereof may be used in an arbitrary combination at arbitrary ratios. Specific examples of the ester of the aliphatic carboxylic acid and the alcohol include bees waxes (mixtures containing myricyl palmitate as a major component), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate. Examples of the aliphatic hydrocarbons having a number average molecular weight of 200 to 15,000 include liquid paraffins, paraffin waxes, microwaxes, polyethylene waxes, Fischer-Tropsch waxes, and α-olefin oligomers having a carbon number of 3 to 12. The aliphatic hydrocarbons also include alicyclic hydrocarbons. Each of these hydrocarbons may be partially oxidized. the aliphatic hydrocarbons may be paraffin waxes, polyethylene waxes, and partially oxidized polyethylene waxes are preferred. Paraffin waxes and polyethylene waxes are more preferred. The number average molecular weight of the aliphatic hydrocarbon may not more than 5000. Examples of the polysiloxane-based silicone oils include dimethyl silicone oils, methylphenyl silicone oils, diphenyl silicone oils, and fluorinated alkyl silicone oils. A single type of mold release agent described above may be included, or two or more types of mold release agents described above may be included in an arbitrary combination at arbitrary ratios. Exemplary mold release agents comprise at least one of aliphatic carboxylic acids or esters of an aliphatic carboxylic acid and an alcohol. The mold release agent may be at least one of at least one of pentaerythritol tetrastearate, glycerol monostearate, and octyldodecyl stearate. The mold release agent may be pentaerythritol tetra stearate.

The amount of the mold release agent is not limited and may be about 0 percent by weight or greater based on the composition, about 0.01 percent by weight or greater or about 0.1 percent by weight or greater. The amount of the mold release agent is not limited and may be about 2 percent by weight or less based on the weight of the composition, about 1 percent by weight or less, or about 0.5 percent by weight or less. In cases where the content of the mold release agent is less than the lower limit of this range, the mold-releasing effect may be insufficient, while in cases where the content of the mold release agent exceeds the upper limit of this range, a decrease in the hydrolysis resistance, mold contamination during injection molding, and the like may occur.

The composition may contain one or more impact modifiers. The terms impact modifiers and rubbers are used interchangeably. Various impact modifiers may be used in the compositions disclosed; such as diene rubbers, ethylene propylene rubbers, ethylene propylene diene (EPDM) rubbers, ethylene copolymer rubbers, acrylate rubbers, polyisoprene rubbers, silicon rubbers, silicon-acrylate rubbers, polyurethanes, thermoplastic elastomers, halogen containing rubbers, and mixtures thereof. Also suitable are inter-polymers of rubber-forming monomers with other copolymerizable monomers. The rubbers may be present in the formulated composition in sufficient amount to provide the desired impact properties to the composition. Desired impact properties include increased izod, charpy, gardner, tensile, falling dart, and the like. Compositions, formulated compositions, as used in this context are the formulated compositions containing all of the ingredients for the intended use.

The rubbers may be diene rubbers such as polybutadiene, polyisoprene, polypiperylene, polychloroprene, and the like or mixtures of diene rubbers, that is, any rubbery polymers of one or more conjugated 1,3-dienes, such as 1,3-butadiene. Such rubbers include homopolymers of 1,3-butadiene and copolymers of 1,3-butadiene with one or more copolymerizable monomers, such as vinylidene substituted aromatic (styrene). The diene rubber may be the homopolymer of 1,3-butadiene. Exemplary copolymers of 1,3-butadiene are block or tapered block rubbers of at least about 30 weight percent 1,3-butadiene, from about 50 weight percent, from about 70 weight percent, or from about 90 weight percent 1,3-butadiene and up to about 70 weight percent vinylidene substituted aromatic monomer, up to about 50 weight percent, up to about 30 weight percent, or up to about 10 weight percent vinylidene substituted aromatic monomer, weights based on the weight of the 1,3-butadiene copolymer. The impact modifiers employed may be those polymers and copolymers which exhibit a second order transition temperature, sometimes referred to as the glass transition temperature (Tg), for the diene fragment which is not higher than 0° C or not higher than -20° C. as determined using conventional techniques, for example ASTM Test Method D 746-52 T. The average particle size of the rubber particles may be equal to or greater than about 0.05 micrometers (microns) (µm), equal to or greater than about 0.1 micrometers, and equal to or greater than about 0.5 micrometers. The average particle size of the rubber particles may be equal to or less than about 10 micrometers, equal to or less than about 5 micrometers, or equal to or less than about 4 micrometers.

The impact modifier may be butadiene- or styrene-butadiene rubber-based and methyl methacrylate-styrene-grafted impact modifiers having a core-shell structure (MBS), siloxane-acrylate rubbers having a core-shell structure, acrylate rubber-based core-shell impact modifiers, and the like. The butadiene- or styrene-butadiene rubber-based core-shell impact modifiers are butadiene- or styrene-butadiene rubber-based impact modifiers grafted with methyl methacrylate or methyl methacrylate-styrene copolymers. Siloxane-acrylate rubbers having a core-shell structure may be produced from alkyl methacrylates and/or alkyl acrylates, crosslinkers, and grafting agents. Exemplary alkyl methacrylates and/or alkyl acrylates are C₁₋₅-alkyl esters, e.g., methyl ester, ethyl ester, n-butyl ester, tert-butyl ester, n-propyl ester, n-hexyl ester, n-octyl ester, n-lauryl ester, and 2-ethylhexyl ester; haloalkyl esters, preferably halo C₁₋₅-alkyl esters, e.g., chloroethyl acrylate, and mixtures of these monomers. Particularly preferred is n-butyl acrylate. A monomer having more than one polymerizable double bond can be used as the crosslinker for the polyalkyl(meth)acrylate-rubber component of siloxane-acrylate rubber. Examples of the crosslinking monomers are esters of unsaturated mono-carboxylic acids having 3 to 8 carbon atoms and unsaturated monohydric alcohols having 3 to 12 carbon atoms or saturated polyols having 2 to 4 OH-groups and 2 to 20 carbon atoms, e.g., ethylene glycol dimethacrylate, propanediol dimethacrylate, 1,3-butanediol dimethacrylate, and 1,4-butanediol dimethacrylate. Such crosslinkers may be used alone or as mixtures of at least two crosslinkers. Exemplary grafting agents are allyl methacrylate, triallylcyanurate, triallylisocyanurate or mixtures thereof. The allyl methacrylate may further be used as the crosslinker. Such grafting agents may be used alone or as mixtures of at least two grafting agents. The crosslinker and grafting agent may be present in an amount of from about 0.1 wt.-% to about 20 wt.-% based on the total weight of the polyalkyl(meth)acrylate-rubber component of siloxane-acrylate rubber. The core may be based on a siloxane rubber. The siloxane core may be about 20 percent by weight or greater of the weight of the impact modifier, about 50 percent by weight or greater. The siloxane core may be about 70 percent by weight or less of the weight of the impact modifier or about 40 percent by weight or less. The compositions disclosed herein contain impact modifiers (rubbers) in an amount of about 0.5 percent by weight of the compositions or greater, about 1.0 percent by weight or greater or about 2.0 percent by weight or greater based on the weight of the composition. The compositions disclosed herein contain impact modifiers in an amount of about 8 percent by weight of the compositions or less, about 6 percent by weight or less, about 5 percent by weight or less or about 3.0 percent by weight or less based on the weight of the composition.

The compositions disclosed herein may include an UV absorber (i.e., UV stabilizers) that in one more embodiment function to stabilize the color of the composition. When UV absorbers are added, the polycarbonates, vinylidene substituted aromatic compounds, or both may absorb light energy from UV rays as heat. UV absorbers may reduce weathering in polymeric compositions, such as compositions of polycarbonates and vinylidene substituted aromatic compounds. UV absorbers may include benzotriazoles, hydroxyphenyltriazines, benzophenoses, s-triazines, the like, or any combination thereof. UV absorbers may be present in an amount of about 500 ppm or more (0.05 weight percent) based on the weight of the compositions, about 1,000 ppm or more (0.1 weight percent), or about 1,500 ppm or more (0.15 weight percent). UV absorbers may be present in about 10,000 ppm or less (1.0 weight percent), about 8,000 ppm or less (0.8 weight percent), about 6,000 ppm or less (0.6 weight percent) or about 5,000 ppm or less (0.5 weight percent).

If employed, the fillers may be reinforcing fillers, such as fibers having a length to diameter ratio of about 4 or more. The amount of other fillers (e.g., non-reinforcing fillers, such as talc, clay, etc.) may be about 10 weight percent or less, about 4 weight percent or less, about 2 weight percent or less or about 1 weight percent or less, based on the total weight of the polymeric composition. A reinforcing filler may be employed for improving the strength of the polymeric composition and/or for reducing the coefficient of linear thermal expansion of the composition. The reinforcing filler may include a glass fiber, a carbon fiber, a metal fiber, or any combination thereof. Exemplary fillers include talc, clay, wollastonite, mica, glass or a mixture thereof. Reinforcing fillers include mineral fillers having a needle-like structure (i.e., acicular structure), such as wollastonite.

The composition may optionally include a component which adsorbs volatile organic compounds. The component may be a zeolite, activated carbon, bamboo, charcoal or combinations thereof.

The disclosed compositions may contain one or more additives that are commonly used in compositions of this type. Exemplary additives include: zinc salts, colorants, reinforcing fibers, stabilizers, antistatic agents, silicon oils, flow enhancers, etc. Exemplary ignition resistance additives may also include antimony oxide and metal salts of aromatic sulfur, or a mixture thereof may be used. Compounds which stabilize rubber-modified vinylidene substituted aromatic copolymer compositions against degradation caused by, but not limited to heat, light, and oxygen, or a mixture thereof may be used Some of these additives may adsorb volatile organic compounds, such as, for example, zeolites, activated carbon, bamboo charcoal, etc.

Additives and/or fillers and/or adsorbents may be present in the formulated compositions in an amount about 0.01 percent by weight or greater, about 0.1 percent by weight or greater, about 1 percent by weight or greater, about 2 percent by weight or greater, or about 3 percent by weight or greater based on the weight of the compositions. The additives and/or fillers may be present in an amount of about 40 percent by weight or less, about 30 percent by weight or less, about 20 percent by weight or less, about 15 percent by weight or less, about 10 percent by weight or less, about 5 percent by weight or less based on the weight of the composition. The additives and adsorbents may be independently present in amounts up to about 5 weight percent while fillers may be present in amounts up to about 40 weight percent based on the weight of the compositions.

The compositions disclosed may be produced by mixing the components in a known manner and melt-compounding and/or melt-extruding them at temperatures of from 200°C to 300°C in conventional units such as internal kneaders, extruders and twin-screw extruders. The individual components may be mixed in a known manner both in succession and simultaneously and both at approximately 23°C (room temperature) and at a higher temperature.

The disclosed compositions may be molded using procedure known in the art. The polycarbonate compositions may be molded into useful shaped articles by a variety of means such as injection molding, overmolding, extrusion, rotational molding, blow molding and thermoforming to form various molded articles. Such articles may include thin-walled articles for consumer goods like cellphones, MP3 players, computers, laptops, cameras, video recorders, electronic tablets, hand receivers, kitchen appliances, electrical housings, etc., e.g. a smart meter housing, and the like; electrical connectors, and components of lighting fixtures, ornaments, home appliances, roofs, greenhouses, sun rooms, swimming pool enclosures, Light Emitting Diodes (LEDs) and light panels, extruded film and sheet articles; electrical parts, such as relays; and telecommunications parts such as parts for base station terminals. The present disclosure further contemplates additional fabrication operations on said articles, such as, but not limited to, molding, in-mold decoration, baking in a paint oven, lamination, and/or thermoforming. The compositions disclosed are heated to temperatures at which the composition flows, which may be above the glass transition temperatures of the polycarbonates in the composition. Such temperatures may be greater than 155 °C, above 200 °C or greater, 250 °C or greater. Such temperatures may be 400 °C or less or 300 °C or less. The mold may be heated to facilitate processing such as to 60 °C or greater, 80 °C or greater or 100 °C or greater.

The UL-94 vertical test (20 mm vertical burn test) in the UL standards is a measuring method used for an index of flame retardancy in an unexpanded resin. The purpose of the test is to determine the resistance of plastic materials used for parts in devices and appliances to flame and glow propagation. UL 94 is used to measure burning rate and characteristics based on standard samples. Sample size is 12.7mm by 127mm, with the thickness varying. Thickness must be reported when a rating is given. The relevant ratings are: V-2, V-1 and V-0. "V-0" is the most common rating seen parts where increases in protection from combustion is required. V-0 carries the following requirements:
1. None of the five samples can have flaming combustion for more than 10 seconds after each of two 10 second flame applications.
2. The total flaming combustion time for the ten 10 second flame applications (5 samples, 2 applications each) of more than 50 seconds.
3. None of the five samples may burn with flaming or glowing combustion up to the holding clamp.
4. None of the five samples may drip flaming particles which ignite dry absorbent cotton located 305 mm below the sample.
5. None of the five samples may have glowing combustion which persists for more than 30 seconds after the second removal of the flame.

The other ratings have a similar format. The most significant difference in the ratings are the times the samples are allowed to support flaming or glowing combustion. The flame application time is the same. Here is a short summary of the V-0, V-1 and V-2 required results: V-0 burning stops within 10 seconds after two applications of ten seconds each of a flame to a test bar and no flaming drips are allowed; V-1 burning stops within 60 seconds after two applications of ten seconds each of a flame to a test bar, and no flaming drips are allowed; and V-2 burning stops within 60 seconds after two applications of ten seconds each of a flame to a test bar and flaming drips are allowed.

The test procedure is summarized here. Test specimens having a specific size are perpendicularly attached to a clamp, flame contact is performed for 10 seconds by 20 mm flame. Each of five specimens is clamped 300 mm above a layer of dry cotton. A calibrated flame is applied to the bottom edge of the vertically supported test bar for 10 seconds and any after flame time (t1) is noted. When after flaming ceases the flame is reapplied for an additional 10 seconds and after flame time (t2) and afterglow time (t3) is noted. If one specimen fails, a second set of five can be tested. More details can be acquired by contacting UL or obtaining a copy of this and other UL Standards by visiting the UL's Standards Department web site, at http://ulstandardsinfonet.ul.com. The Table below, defines the specific criteria for V-0, V-1 and V-2 ratings.

**TABLE**

| Criteria Conditions | V-0 | V-1 | V-2 |
|---|---|---|---|
| Afterflame time for each individual specimen T1 or T2, | ≦10 s | ≦30 s | ≦30 s |
| Total afterflame time for any condition set (T1 plus T2 for the 5 specimens) | ≦50 s | ≦250 s | ≦250 s |
| Afterflame plus afterglow time for each individual flame application (T2 + T3) | ≦30 s | ≦60 s | ≦60 s |
| Afterflame or afterglow of any specimen up to the holding clamp | No | No | No |
| Cotton indicator ignited by flaming particles or drops | No | No | Yes |

Samples can be subjected to water immersion before performing the UL-94 vertical test (20 mm vertical burn test). Specimens shall be immersed in distilled or deionized water at 70 ±2°C (158 ±4°F) for 7 days. A complete change of water is to be made on each of the first 5 days. Following the immersions, those specimens to be subjected to flammability tests are to be conditioned in air at 23 ±2°C (73 ±4°F) and 50 ±10 percent relative humidity for 2 weeks.

### Embodiments

1. A composition comprising:
   a) at least one polycarbonate polymer;
   b) an impact modifier comprising a silicone core; and
   c) a phosphazene-based flame retardant.
2. The composition of embodiment 1, wherein the composition comprises a polyarylate, or at least a portion of the at least one polycarbonate is a high temperature polycarbonate.
3. The composition of embodiment 1 or 2, wherein the composition comprises about 90 percent by weight or greater of the at least one polycarbonate polymer.
4. The composition of any of the preceding embodiments, wherein at least one polycarbonate polymer comprises from about 0 to about 95 weight percent linear polycarbonate.
5. The composition of any of the preceding embodiments, wherein the at least one polycarbonate comprises at least one of:
   a polycarbonate having a low melt flow rate;
   a polycarbonate having a medium melt flow rate; and
   a polycarbonate having a high melt flow rate.
6. The composition of embodiment 5, wherein the low melt flow rate is from about 0.1 to about 5 g/10 minutes; the medium melt flow rate is from about 5 to about 15 g/10 min; and the high melt flow is greater than about 15 g/10 min, measured according to ASTM D1238.
7. The composition of any of the preceding embodiments, wherein the at least one polycarbonate polymer comprises about 50% to 90% by weight of high temperature polycarbonate.
8. The composition of any of the preceding embodiments, wherein about the high temperature polycarbonate has melt flow rate of about 3 to about 30 g/10 min measured according to ASTM D1238.
9. The composition of any of the preceding embodiments, wherein about the high temperature polycarbonate has a glass transition temperature of about 150 °C or greater as determined Differential Scanning Calorimetry according to ASTM Test Method D 746-52 T.
10. The composition of any of the preceding embodiments, wherein a portion of the at least one polycarbonate polymer is a post-consumer recycled polymer.
11. The composition of any of the preceding embodiments, wherein the composition comprises from about 10% to about 30% weight percent polyarylate based on the weight of the composition.
12. The composition of any of the preceding embodiments, wherein the polyarylate has a molecular weight of about 10,000 to about 150,000 amu.
13. The composition of any of the preceding embodiments, wherein the composition comprises about 3.0 percent by weight or less of the impact modifier based on the weight of the composition.
14. The composition of any of the preceding embodiments, wherein the impact modifier contains about 20 to about 70 percent by weight of a silicone core component based on the weight of impact modifier.
15. The composition of any of the preceding embodiments, wherein the composition comprises about 5.0 percent by weight or less of phosphazene-based flame retardant based on the weight of the composition.
16. The composition of any of the preceding embodiments, wherein the phosphazene-based flame retardant is cyclic structure containing one or more phosphazene units.
17. The composition of any of the preceding embodiments, wherein the phosphazene-based flame retardant comprises at least one of phenoxy cyclotriphosphazene, octaphenoxy cyclotetraphosphazene, hexaphenoxycyclotriphosphazene, and decaphenoxy cyclopentaphosphazene
18. The composition of any of the preceding embodiments, wherein the phosphazene-based flame retardant comprises hexaphenoxycyclotriphosphazene.
19. The composition of any of the preceding embodiments, wherein the composition comprises an anti-drip agent.
20. The composition of embodiment 19, wherein the composition comprises from about 0.1 to 0.9 percent by weight of the anti-drip agent based on the weight of the composition.
21. The composition of embodiment 19 wherein the anti- drip agent is a fibril forming or non-fibril forming fluorinated polyolefin.
22. The composition of embodiment 19, wherein the anti- drip agent is a polytetrafluoroethylene encapsulated in styrene acrylonitrile.
23. The composition of any of the preceding embodiments, wherein the composition comprises a mold release agent.
24. The composition of embodiment 23, wherein the composition comprises about 0.1 to 1 percent by weight of the mold release agent based on the weight of the composition.
25. The composition of embodiment 23 or 24, wherein the mold release agent is at least one of aliphatic carboxylic acids; esters of an aliphatic carboxylic acid and an alcohol; aliphatic hydrocarbon compounds having a number average molecular weight of 200 to 15,000; and polysiloxane-based silicone oils or combinations thereof.
26. The composition of embodiment 23 or 24, wherein the mold release agent is at least one of aliphatic carboxylic acids or esters of an aliphatic carboxylic acid and an alcohol.
27. The composition of embodiment 23, wherein the mold release agent is at least one of at least one of pentaerythritol tetrastearate, glycerol monostearate, and octyldodecyl stearate.
28. The composition of embodiment 23, wherein the mold release agent is pentaerythritol tetra stearate.
29. The composition of any of the preceding embodiments, wherein the composition comprises an antioxidant.
30. The composition of embodiment 28, wherein the composition comprises about 0.05 to 0.5 percent by weight of the antioxidant based on the weight of the composition.
31. The composition of embodiment 28, wherein the antioxidant is one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants.
32. The composition of embodiment 28, wherein the antioxidant is one or more of phenol and phosphorous based antioxidants.
33. The composition of embodiment 28, wherein the antioxidant includes both a phenol and phosphorous base.
34. The composition of embodiment 28, wherein the antioxidant is at least one of tris(2,4-di-tert-butylphenyl)phosphite and Octadecyl 3-(3,5-di-tert-butyl-4-hydroxyphenyl)propionate.
35. The composition of any of the preceding embodiments, wherein the composition comprises a UV stabilizer.
36. The composition of embodiment 34, wherein the composition comprises about 0.1 to 0.3 percent by weight of the UV stabilizer based on the weight of the composition.
37. The composition of embodiment 34, wherein the UV stabilizer is one or more of benzotriazoles, hydroxyphenyltriazines, benzophenoses, and s-triazines or any combination thereof.
38. The composition of embodiment 34, wherein the UV stabilizer is at least one of 2-(2H-benzotriazol-2-yl)-4,6-bis(1-methyl-1-phenylethyl)phenol, 2,2'-Methylenebis[6-(2H-benzotriazol-2-yl)-4-(1,1,3,3-tetramethylbutyl)phenol], and 2-(2H-Benzotriazol-2-yl)-4-(1,1,3,3-tetramethylbutyl)phenol.
39. The composition of any of the preceding embodiments, wherein the composition comprises;
   from about 60 to about 93 weight percent of at least one polycarbonate polymer;
   from about 0.1 to about 3.0 weight percent of impact modifier comprising a silicone core;
   from about 1.0 to about 5.0 weight percent of the phosphazene-based flame retardant;
   from 0 to about 30 weight percent of the polyarylate;
   from 0 to about 0.5 weight percent of the anti-drip agent;
   from 0 to about 0.5 weight percent of the mold release agent;
   from 0 to about 0.2 weight percent of the antioxidant;
   from 0-0.5 weight percent of the UV stabilizer; and
   from 0 to about 10 weight percent colorant;
   wherein from 0 to about 90 percent of the at least one polycarbonate polymer is high temperature polycarbonate; and wherein the weight is based on the weight of the composition.
40. The composition of any of the preceding embodiments, wherein the composition has a melt flow rate of about 3 to 30 at 300°C/1.2kg.
41. The composition of any of the preceding embodiments, wherein the composition prepares an article having UL94 V-0 @ 1.0 mm flame retardancy.
42. The composition of any of the preceding embodiments, wherein the composition prepares an article having UL94 V-0 @ 1.0 mm flame retardancy after water immersion.
43. The composition of any of the preceding embodiments, wherein the composition prepares an article having a heat deflection temperature of above 110 Celsius at 1.8 MPa according to ASTM D648.
44. The composition of any of the preceding embodiments, wherein the composition prepares an article having a heat deflection temperature of above 120 Celsius at 1.8 MPa according to ASTM D648.
45. The composition of any of the preceding embodiments, wherein the composition prepares an article having a heat deflection temperature of above 125 Celsius at 1.8 MPa according to ASTM D648.
46. The composition of any of the preceding embodiments, wherein the composition does not contain a charring salt.
47. The composition of embodiment 46 wherein the charring salt is an organometallic salt of a perflourohydrocarbyl sulfur compounds or aromatic sulfur compounds.
48. The composition of embodiment 46 wherein the charring salt is perfluorobutane sulfonic acid potassium salt.
49. A molded article prepared from the compositions from according to any one of the preceding embodiments.
50. The article of embodiment 49, wherein the article achieves UL94 V-0 @ 1.0 mm flame retardancy.
51. The article of embodiment 49 or embodiment 50, wherein the article achieves UL94 V-0 @ 1.0 mm flame retardancy after water immersion.
52. The article of any of embodiment 49 to embodiment 51, wherein the article has a heat deflection temperature of above 110 Celsius at 1.8 MPa according to ASTM D648.
53. The article of any of embodiment 49 to embodiment 52, wherein the article has a heat deflection temperature of above 120 Celsius at 1.8 MPa according to ASTM D648.
54. The article of any of embodiment 49 to embodiment 53, wherein the article has a heat deflection temperature of above 125 Celsius at 1.8 MPa according to ASTM D648.
55. A method comprising:
   a) contacting the elements of any one of embodiment 1 to embodiment 54 with intimate mixing at a temperature of about 250 °C or greater for about 10 seconds or greater;
   b) filling a mold with the mixed composition of a);
   c) allowing the composition in the mold to form a solid article; and
   d) removing the formed article from the mold.
56. A method according to embodiment 55, wherein the contacting with mixing is performed in an extruder and the formed mixture is moved from the extruder to a mold.

### Illustrative Examples

The following examples are provided to illustrate the invention but are not intended to limit the scope thereof. All parts and percentages are by weight unless otherwise indicated.

Several specimens are prepared by the following procedure. The materials listed in the tables above are compounded and granulated on a twin-screw extruder (Coperion ZSK-26) at a speed of -400 rpm at a throughput of 80 kg/h at 290°C. Samples are molded into the dimensions of 12.7mm by 127mm, with a 1.0 mm thickness.

Melt flow rates of pre-dried granules at 120 °C for 4 hours are determined as described hereinbefore. Heat deflection temperature (HDT) is determined using the test according to ASTM D648 at 1.8 mPa.

The compositions tested and the test results are compiled in Table 1. Comparative examples are compiled in Table 2

**Table 1**

| Example | **A** | **B** | **C** | **D** | **E** | **F** | **G** | **H** | **I** | **J** | **K** | **L** | **M** |
|---|---|---|---|---|---|---|---|---|---|---|---|---|---|
| Polycarbonate MFR 10, Mw 28000 | 27.6 | 27.6 | 26.6 | 26 | 25.6 | 52.2 | 42.2 | 32.2 | | | | | |
| Polycarbonate MFR 23 Mw 22000 | 24.6 | 24.6 | 24.6 | 24.6 | 24.6 | | | | | | | 60.2 | 80.2 |
| Polycarbonate MFR 3 Mw 35000 | 30 | 30 | 30 | 30 | 30 | 30 | 30 | 30 | 20.2 | | 80.2 | 20 | |
| Polyarylate Tg 185C | | | | | | 10 | 20 | 30 | | | | | |
| Polycarbonate Tg 157, MFR 13 Mw 26000 | | | | | | | | | 60 | 80.2 | | | |
| Polycarbonate MFR 15, Mw 25000 | | | | | | | | | | | | | |
| Polycarbonate Powder MFR10 Mw 28000 | 10 | 10 | 10 | 10 | 10 | | | | 10 | 10 | 10 | 10 | 10 |
| Silicon impact modifier¹ | | | | 3.00 | 3.00 | 2 | 2 | 2 | 3 | 3 | 3 | 3 | 3 |
| Silicon impact modifier ² | | 2 | 2 | | | | | | | | | | |
| MBS impact modifier ³ | 2 | | | | | | | | | | | | |
| KPFBS ⁴ | | | | | | | | | | | | | |
| Phosphazene ⁵ | 4 | 4 | 4.9 | 4.5 | 4.9 | 4 | 4 | 4 | 4.9 | 4.9 | 4.9 | 4.9 | 4.9 |
| Anti-dripping agent ⁶ | 0.8 | 0.8 | 0.9 | 0.9 | 0.9 | 0.8 | 0.8 | 0.8 | 0.9 | 0.9 | 0.9 | 0.9 | 0.9 |
| Mold release agent ⁷ | 0.5 | 0.5 | 0.5 | 0.5 | 0.5 | 0.5 | 0.5 | 0.5 | 0.5 | 0.5 | 0.5 | 0.5 | 0.5 |
| Antioxidant ⁸ | 0.2 | 0.2 | 0.2 | 0.2 | 0.2 | 0.2 | 0.2 | 0.2 | 0.2 | 0.2 | 0.2 | 0.2 | 0.2 |
| T-234 UV stabilizer ⁹ | 0.3 | 0.3 | 0.3 | 0.3 | 0.3 | 0.3 | 0.3 | 0.3 | 0.3 | 0.3 | 0.3 | 0.3 | 0.3 |
| Total | 100 | 100 | 100 | 100 | 100 | 100 | 100 | 100 | 100 | 100 | 100 | 100 | 100 |
| MFR (300 C/1.2 g) (g/10min) | 8.4 | 10.3 | 10.6 | 11.4 | 10.3 | 12.6 | 11.3 | 8.7 | 7.5 | 8.1 | 4.1 | 14.8 | 19 |
| HDT, flatwise, span=64 mm (1.8MPa) | 115 | 115 | 113 | 113 | 111 | 115 | 116 | 123 | 118 | 120 | 110 | 110 | 109 |
| UL94 V (1.0mm) | V-0 | V-0 | V-0 | V-0 | V-0 | V-0 | V-0 | V-0 | V-0 | V-0 | V-0 | V-0 | V-0 |
| UL94 V (1.0mm) after water immersion | V-1 | V-0 | V-0 | V-0 | V-0 | | | | | | | | |
| | | | | | | | | | | | | | |
| POLYCARBONATE % by weight | 92.2 | 92.2 | 91.2 | 90.6 | 90.2 | 82.2 | 72.2 | 62.2 | 70 | 90.2 | 90.2 | 90.2 | 90.2 |
| POLYARYLATE% by weight | 0 | 0 | 0 | 0 | 0 | 10 | 20 | 30 | 20.2 | 0 | 0 | 0 | 0 |
| POLYMER TOTAL % by weight | 92.2 | 92.2 | 91.2 | 90.6 | 90.2 | 92.2 | 92.2 | 92.2 | 90.2 | 90.2 | 90.2 | 90.2 | 90.2 |

| | | | | | | | | | | | | | |
|---|---|---|---|---|---|---|---|---|---|---|---|---|---|
| 1. Silicone-based graft copolymer, containing more than 70 wt.% of a silicone core component with a graft polymer component shell derived from mainly acrylic ester monomer 2. Silicone-based graft copolymer, containing more than 20 wt.% of a silicone core component with a graft polymer component shell derived from mainly acrylic ester monomer 3. Butadiene/methyl methacrylate/styrene block copolymer 4. Charring salt potassium perfluoro butane sulfonate salt 5. Hexaphenoxycyclotriphosphazene 6. PTFE (polytetrafluoroethylene) encapsulated in SAN (50% fluoropolymer) 7 Pentaerythritol tetrastearate 8 Tris(2,4-di-tert-butylphenyl)phosphite 9 Benzotriazole UV absorber | | | | | | | | | | | | | |

### Amounts are in Weight percent

**Table 2**

| Example | **O** | **P** | **Q** | **R** | **S** | **T** |
|---|---|---|---|---|---|---|
| Polycarbonate MFR 10, Mw 28000 | 26.55 | 26.52 | 26.5 | 26.55 | 26.52 | 26.5 |
| Polycarbonate MFR 23 Mw 22000 | | | | | | |
| Polycarbonate MFR 3 Mw 35000 | 20 | 20 | 20 | 20 | 20 | 20 |
| Polyarylate Tg 185C | | | | | | |
| Polycarbonate Tg 157, MFR 13 Mw 26000 | | | | | | |
| Polycarbonate MFR 15, Mw 25000 | 40 | 40 | 40 | 40 | 40 | 40 |
| Polycarbonate Powder MFR10 Mw 28000 | 10 | 10 | 10 | 10 | 10 | 10 |
| Silicon impact modifier¹ | 1.5 | 1.5 | 1.5 | | | |
| Silicon impact modifier ² | | | | 1.5 | 1.5 | 1.5 |
| MBS impact modifier ³ | | | | | | |
| KPFBS ⁴ | 0.05 | 0.08 | 0.1 | 0.05 | 0.08 | 0.1 |
| Phosphazene ⁵ | | | | | | |
| Anti-dripping agent ⁶ | 0.9 | 0.9 | 0.9 | 0.9 | 0.9 | 0.9 |
| Mold release agent ⁷ | 0.5 | 0.5 | 0.5 | 0.5 | 0.5 | 0.5 |
| Antioxidant ⁸ | 0.2 | 0.2 | 0.2 | 0.2 | 0.2 | 0.2 |
| T-234 UV stabilizer ⁹ | 0.3 | 0.3 | 0.3 | 0.3 | 0.3 | 0.3 |
| Total | 100 | 100 | 100 | 100 | 100 | 100 |
| MFR (300 C/1.2 g) (g/10min) | 9.6 | 9.7 | 9.8 | 9 | 8.5 | 9.3 |
| HDT, flatwise, span=64 mm (1.8MPa) | 124 | 125 | 124 | 123 | 125 | 125 |
| UL94 V (1.0mm) | No Rating | V-1 | V-1 | No Rating | No Rating | No Rating |
| UL94 V (1.0mm) after water immersion | | | | | | |

| | | | | | | |
|---|---|---|---|---|---|---|
| POLYCARBONATE % by weight | 96.55 | 96.52 | 96.5 | 96.55 | 96.52 | 96.5 |
| POLYARYLATE % by weight | 0 | 0 | 0 | 0 | 0 | 0 |
| POLYMER TOTAL % by weight | 96.55 | 96.52 | 96.5 | 96.55 | 96.52 | 96.5 |

The examples demonstrate composition with great flame retardancy and excellent physical properties. The disclosed composition does not contain alkali metal salts of perfluoro alkane sulfonates, which has been list as substance of very high concern in Europe. Even after water immersion, flammability rating is still retained through the use of silicone based impact modifier. In addition, by adding high Tg polycarbonate, the thermal performance will be improved.

## Claims

1. A composition comprising:
a) at least one polycarbonate polymer;
b) an impact modifier comprising a silicone core; and
c) a phosphazene-based flame retardant.

2. The composition of claim 1, wherein the composition comprises a polyarylate, or at least a portion of the at least one polycarbonate is a high temperature polycarbonate having a glass transition temperature of about 150 °C or greater as determined Differential Scanning Calorimetry according to ASTM Test Method D 746-52 T.

3. The composition of any of the preceding claims, wherein at least one polycarbonate polymer comprises from about 0 to about 95 weight percent linear polycarbonate.

4. The composition of any of the preceding claims, wherein the at least one polycarbonate comprises at least one of:
a polycarbonate having a low melt flow rate of about 0.1 to about 5 g/10 minutes;
a polycarbonate having a medium melt flow rate of about 5 to about 15 g/10 min; and
a polycarbonate having a high melt flow rate about greater than 15 g/10 min measured according to ASTM D1238.

5. The composition of any of the preceding claims, wherein the at least one polycarbonate polymer comprises about 50% to 90% by weight of high temperature polycarbonate.

6. The composition of any of the preceding claims, wherein the composition comprises from about 10% to about 30% weight percent polyarylate, having a molecular weight of about 10,000 to about 150,000 amu, based on the weight of the composition.

7. The composition of any of the preceding claims, wherein the composition comprises about 3.0 percent by weight or less of the impact modifier based on the weight of the composition.

8. The composition of any of the preceding claims, wherein the impact modifier contains about 20 to about 70 percent by weight of a silicone core component based on the weight of impact modifier.

9. The composition of any of the preceding claims, wherein the composition comprises about 5.0 percent by weight or less of phosphazene-based flame retardant based on the weight of the composition .

10. The composition of any of the preceding claims, wherein the composition does not contain a charring salt. wherein the charring salt is an organometallic salt of a perflourohydrocarbyl sulfur compounds or aromatic sulfur compounds

11. A molded article prepared from the compositions from according to any one of the preceding claims having UL94 V-0 @ 1.0 mm flame retardancy and a heat deflection temperature of above 110 Celsius at 1.8 MPa according to ASTM D648.

12. The composition of any of the preceding embodiments, wherein a portion of the at least one polycarbonate polymer is a post-consumer recycled polymer.

13. The composition of any of the preceding claims, wherein the composition comprises;
from about 60 to about 93 weight percent of at least one polycarbonate polymer;
from about 0.1 to about 3.0 weight percent of impact modifier comprising a silicone core;
from about 1.0 to about 5.0 weight percent of the phosphazene-based flame retardant;
from 0 to about 30 weight percent of the polyarylate;
from 0 to about 0.5 weight percent of the anti-drip agent;
from 0 to about 0.5 weight percent of the mold release agent;
from 0 to about 0.2 weight percent of the antioxidant;
from 0-0.5 weight percent of the UV stabilizer; and
from 0 to about 10 weight percent colorant;
wherein from 0 to about 90 percent of the at least one polycarbonate polymer is high temperature polycarbonate; and wherein the weight is based on the weight of the composition.

14. A method comprising:
a) contacting the elements of any one of claim 1 to claim 54 with intimate mixing at a temperature of about 250 °C or greater for about 10 seconds or greater;
b) filling a mold with the mixed composition of a);
c) allowing the composition in the mold to form a solid article; and
d) removing the formed article from the mold.

15. A method according to claim 14, wherein the contacting with mixing is performed in an extruder and the formed mixture is moved from the extruder to a mold.
